## Europäisches Patentamt

(19) **European Patent Office**

**Office européen des brevets**

(11) Numéro de publication: **0 239 440**
**B1**

(12) # FASCICULE DE BREVET EUROPÉEN

(45) Date de publication du fascicule du brevet:
07.02.90

(51) Int. Cl. ⁵: **B 60 Q   1/04,  F 16 B   2/04**

(21) Numéro de dépôt: **87400388.2**

(22) Date de dépôt: **23.02.87**

(54) **Dispositif de fixation réglable, notamment pour projecteur de véhicule.**

(30) Priorité: **24.02.86 FR 8602499**
**11.12.86 FR 8617345**

(43) Date de publication de la demande:
**30.09.87 Bulletin 87/40**

(45) Mention de la délivrance du brevet:
**07.02.90 Bulletin 90/06**

(84) Etats contractants désignés:
**DE SE**

(56) Documents cité:
**DE-A-1 914 990**
**FR-A-1 288 914**
**FR-A-2 188 101**
**US-A-3 433 514**

(73) Titulaire: **VALEO VISION**
**17, rue Henri Gautier**
**F-93012 Bobigny Cédex (FR)**

(72) Inventeur: **Philippe, Eric**
**30, rue Schnapper**
**F-78100 Saint-Germain-en-Laye (FR)**
Inventeur: **Berton, Jacques**
**27, rue Jules Ferry**
**F-77186 Noisiel (FR)**

(74) Mandataire: **Martin, Jean-Jacques**
**Cabinet REGIMBEAU 26, Avenue Kléber**
**F-75116 Paris (FR)**

LIBERGRAF, STOCKHOLM 1990

## Description

La présente invention concerne d'une façon générale la fixation des projecteurs ou analogues sur les véhicules automobiles. Elle concerne en particulier un dispositif de fixation réglable destiné par exemple à assurer un alignement correct entre la glace de fermeture du projecteur et les bords voisins de la carrosserie.

Du fait des tolérances existant nécessairement dans la réalisation des carrosseries de véhicules automobiles, il existe souvent des problèmes, de nature essentiellement esthétique, relatifs à un alignement de surface incorrect entre la glace de fermeture du projecteur et les bords avoisinants de la carrosserie. En effet, un projecteur est fixé dans la majorité des cas non pas directement sur les bords de la carrosserie, mais à un support spécialement aménagé à l'intérieur de celle-ci.

Une solution classique, mais peu commode, à ce problème consiste à placer sur les vis assurant la fixation du projecteur sur la carrosserie une série de rondelles d'entretoisement ou analogues dont le nombre est déterminé pour assurer une position relative correcte entre la glace et la carrosserie. Cependant, une telle procédure de réglage est extrêmement fastidieuse, du fait que l'opérateur doit à maintes reprises effectuer le montage et le démontage du projecteur, pour déterminer par approches successives le nombre idéal de rondelles à prévoir sur chaque vis.

La présente invention vise à pallier cet inconvénient de l'art antérieur et à proposer un dispositif de fixation réglable pour un projecteur, qui soit à la fois d'une mise en oeuvre extrêmement simple et rapide, et très bon marché, tout en assurant une fixation ferme et fiable du projecteur dans sa position correcte.

A cet effet, la présente invention concerne un dispositif caractérisé en ce qu'il comprend deux éléments susceptibles de se déplacer l'un par rapport à l'autre selon une relation de coulissement lors d'une opération de réglage du projecteur, l'un desdits éléments étant solidaire du projecteur et l'autre étant apte à être fixé sur la carrosserie du véhicule par une vis, le dispositif comprenant en outre un organe élastique de verrouillage susceptible de coopérer avec le second élément et avec la vis, et comportant au moins un bord d'accrochage, le serrage de ladite vis provoquant initialement l'appui du second élément contre la carrosserie du véhicule puis, en utilisant cet appui, la déformation élastique dudit organe et la venue en prise du ou des bords d'accrochage avec le premier élément pour assurer le blocage des deux éléments dans leur position relative correspondant au réglage souhaité.

Dans une première forme de réalisation de l'invention, l'organe élastique de verrouillage présente la forme d'une lame de ressort cintrée qui, lors du serrage de la vis, se déforme et vient progressivement en prise contre la surface intérieure des parois du premier élément.

Dans une seconde forme de réalisation de l'invention, l'organe élastique est une rondelle de caoutchouc, ladite déformation élastique étant une compression axiale avec expansion latérale.

D'autres caractéristiques et avantages de la présente invention ressortiront mieux à la lecture de la description suivante de modes de réalisation préférés de celle-ci, donnée à titre d'exemple et faite en référence aux dessins annexés, sur lesquels:

- la figure 1 est une vue de face schématique d'un projecteur équipé de dispositifs de fixation réglable de l'invention,
- la figure 2 est une vue en perspective éclatée d'un dispositif de fixation selon une première forme de réalisation de l'invention,
- la figure 3 est une vue en perspective du dispositif en position montée,
- la figure 4 est une vue en coupe verticale longitudinale du dispositif de la figure 3,
- la figure 5 est une vue en coupe horizontale du dispositif des figures 3 et 4,
- la figure 6 est une vue d'extrémité axiale du dispositif des figures 3 à 5,
- la figure 7 est une vue de détail à échelle agrandie d'une variante de réalisation d'une partie du dispositif des figures 1 à 6,
- la figure 8 est une vue en perspective éclatée d'un dispositif selon une seconde forme de réalisation de l'invention,
- la figure 9 est une vue en coupe transversale d'un élément du dispositif,
- la figure 10 est une vue en coupe verticale longitudinale du dispositif en position montée,
- la figure 11 est une vue de face du dispositif de la figure 3, et
- la figure 12 est une vue en coupe horizontale du dispositif des figures 3 et 4.

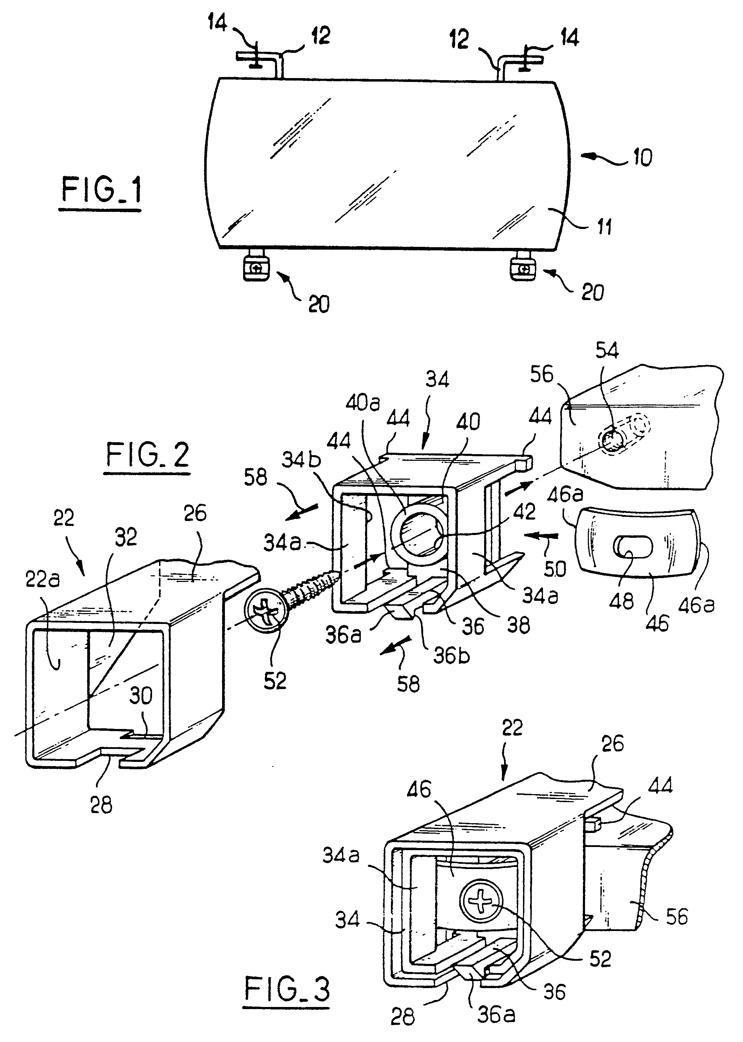

En référence au dessin, on a représenté sur la figure 1, en vue de face schématique, un projecteur de véhicule automobile indiqué globalement en 10. Il comporte dans sa région supérieure, de façon bien connue, deux languettes souples 12 pour sa fixation avec un certain jeu sur la carrosserie du véhicule, à l'aide de vis 14. Il comprend en outre, aux deux extrémités de son bord inférieur, deux dispositifs de fixation 20 conformes à la présente invention, qui offrent dans le présent exemple une possibilité de réglage destinée à assurer un alignement parfait entre la glace frontale de fermeture du projecteur et la carrosserie, pour des raisons de nature essentiellement esthétique.

En référence aux figures 2 à 6, on va décrire un dispositif de fixation réglable selon une première forme de réalisation de l'invention. On peut noter ici que les termes "avant" et "arrière" qui seront utilisés tout au long de la description font référence à l'observation de la vue en perspective de la figure 2.

Le dispositif est constitué essentiellement par deux éléments. Un premier élément ou fourreau 22 est solidaire du boîtier 24 du projecteur 10 par l'intermédiaire d'une patte 26. Plus précisément, ce fourreau, d'axe sensiblement horizontal et parallèle à l'axe du projecteur, présente une section carrée, à l'exception d'une de ses arêtes inférieures, qui est biseautée. En outre on a ménagé dans le bord avant de la partie inférieure horizontale du fourreau 22 une encoche rectangulaire 28, à des fins expliquées plus loin, et dans le bord arrière de ladite partie une rampe 30.

Le fourreau 22 sera avantageusement réalisé en tôle pliée, et est ici pourvu en outre d'un flanc raidisseur 32, afin que la liaison entre le fourreau et le projecteur soit d'une grande rigidité.

Le second élément du dispositif de fixation est constitué par un coulisseau 34 dont la section extérieure, de forme générale carrée, présente des dimensions de préférence légèrement inférieures à celles de la section intérieure du fourreau, afin de pouvoir coulisser librement dans celui-ci en direction horizontale, avec un jeu transversal minime.

Le coulisseau comporte dans sa partie inférieure horizontale un doigt souple 36 dirigé axialement vers l'avant et dont l'extrémité libre 36a est biseautée. Il comporte à sa surface inférieure un épaulement 36b susceptible de coopérer avec l'encoche 28 du fourreau 22, comme on l'expliquera plus loin.

Par ailleurs, les deux flancs 34a du coulisseau 34 sont ouverts approximativement sur toute leur moitié arrière, pour définir à mi-longueur deux bords verticaux d'appui 34b.

Un montant vertical 38 s'étend entre le sommet et le fond du coulisseau à l'arrière de celui-ci, et supporte à mi-hauteur un manchon 40 d'un seul tenant avec lui, en définissant un trou axial traversant 42. La surface annulaire d'extrémité avant 40a du manchon est droite et sensiblement coplanaire avec la surface des bords d'appui 34b mentionnés plus haut.

Enfin le coulisseau 34 comporte, à trois de ses quatre coins arrière, des parties 44 en saillie latéralement vers l'extérieur. Ces saillies 44 sont susceptibles de coopérer avec les bords arrière du fourreau 22, comme expliqué plus loin.

On peut préciser ici que le coulisseau 34 est de préférence réalisé d'un seul tenant, en matière plastique rigide moulée.

Le coulisseau 34 est destiné à recevoir un organe élastique de verrouillage sous la forme d'une lame 46, réalisée en acier à ressort, de forme générale rectangulaire et arrondie sur ses deux petits bords latéraux 46a. La lame ressort 46 possède en outre dans sa région centrale un trou 48 oblong en direction horizontale. Elle est par ailleurs cintrée de manière à présenter, au repos un profil horizontal concave vers l'arrière, comme illustré.

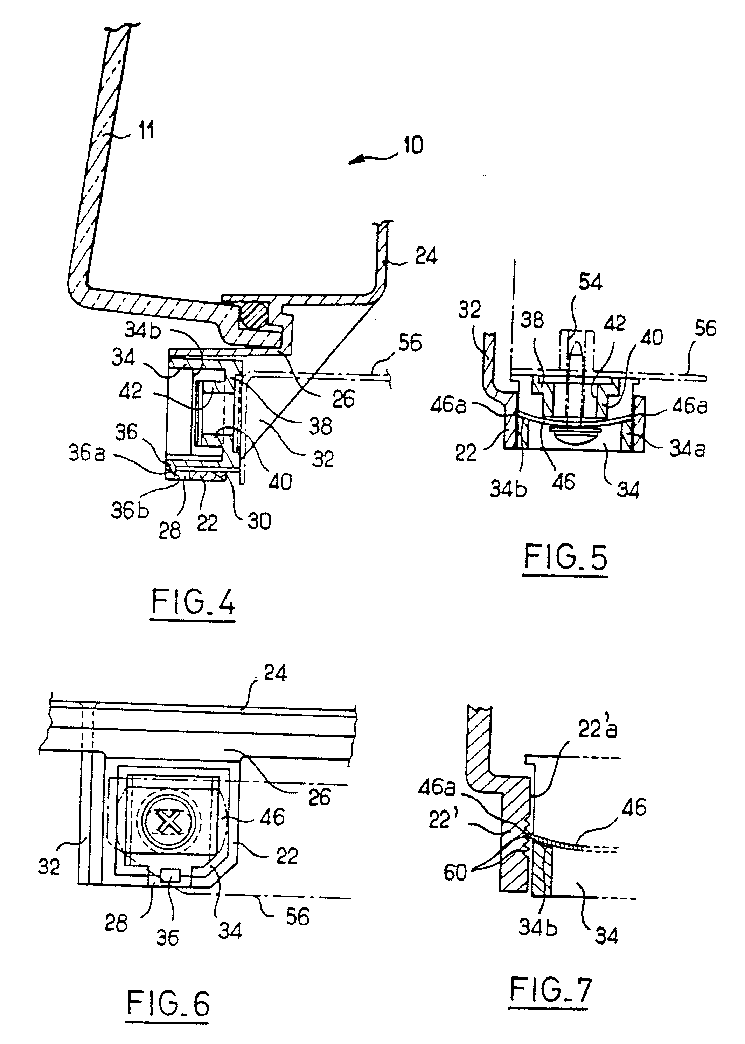

La lame ressort 46 est dimensionnée pour pouvoir être montée à l'intérieur du coulisseau 34, par exemple selon la flèche 50 de la figure 2, comme illustré sur la figure 3. Plus précisément, les régions d'extrémité latérale de sa face avant coopèrent avec les bords d'appui 34b des flancs 34a du coulisseau, tandis que la région centrale de sa face arrière, autour du trou oblong 48, coopèrent avec la surface d'extrémité annulaire 40a du manchon 40, comme le montrent en particulier les figures 4 et 5.

On peut noter que, dans cette position de repos, la largeur de la lame ressort 46 doit être légèrement inférieure à la largeur intérieure du fourreau 22, pour permettre comme on le verra plus loin la phase de montage préliminaire du dispositif.

Enfin une vis 52 est susceptible d'être vissée dans un trou taraudé complémentaire 54 prévue sur une partie formant console 56 de la carrosserie du véhicule, en traversant, de l'avant vers l'arrière, le trou central 48 de la lame ressort 46 et le trou axial 42 traversant le fourreau 34. Ces deux trous sont surdimensionnés par rapport au diamètre externe de la partie filetée de la vis 52.

La vis 52, à des fins de clarté des dessins, n'a pas été représentée sur la figure 4.

Le montage et l'utilisation du dispositif de fixation réglable décrit ci-dessus sont les suivants.

Comme on l'a indiqué, la lame ressort 46 est mise en place dans le coulisseau 34, les trous 42 et 48 étant sensiblement alignés.

Le coulisseau peut alors être inséré par l'arrière dans son fourreau 22, selon les flèches 58. Au cours de ce mouvement de coulissement mutuel, l'extrémité biseautée 36a du doigt 36 franchit la partie inférieure du fourreau 22 grâce à la rampe 30, et son épaulement vient par la suite s'encliqueter par dessus le fond de l'encoche 28. Les divers éléments (en particulier le doigt 36 et l'encoche 28) sont dimensionnés de telle sorte que, une fois cette position acquise, les deux éléments 22 et 34 du dispositif puissent coulisser librement en direction longitudinale entre les deux butées définies par le doigt 36 et les saillies 44, avec un jeu déterminé, par exemple de l'ordre de 3 à 5 mm. Ce jeu permet, comme on va l'expliquer, le réglage de la position du projecteur 10 par rapport à la carrosserie.

On peut préciser ici que la largeur de la lame ressort 46 est choisie de manière à autoriser ce coulissement mutuel. Mais de préférence, ses bords latéraux arrondis 46a affleureront aux surfaces latérales extérieures du coulisseau 34. De cette manière, la lame ressort 46, alors privée de ses deux issues latérales par la présence des flancs du fourreau 22, est emprisonnée dans l'assemblage.

Une fois cet assemblage préliminaire réalisé, le projecteur 10 peut être mis en place sur le véhicule. De préférence, on réalise tout d'abord la fixation des deux languettes souples supérieures 12 (figure 1), puis chacun des deux assemblages inférieurs 20 tels que définis ci-dessus est amené en regard du trou 54 de la carrosserie, et plaqué contre celle-ci. La vis 52 est alors mise en place dans les trous respectifs 48 et 42 de la lame 46 et du coulisseau 34, et vissée dans le trou 54.

Pendant la plus grande partie du vissage (à l'aide d'un tournevis classique), l'assemblage est progressivement rapproché de la console 56, sans qu'aucune contrainte ne soit appliquée au ressort. En effet, tant que le coulisseau n'est pas venu en appui par sa face postérieure contre la console 56, aucun effort de serrage ne peut être effectué par la vis 52 entre sa tête et la surface annulaire 40a.

Dès que le coulisseau 34 est en appui contre la console, le ressort 46 étant alors toujours au repos, on effectue manuellement le réglage de l'orientation du projecteur de manière à ce que sa glace de fermeture, indiquée en 11, soit parfaitement alignée avec les bords voisins de la carrosserie du véhicule. Une fois ce réglage effectué et conservé à l'aide de la main, on tourne à nouveau la vis 52, ce qui provoque le pincement avec une force progressivement croissante de la lame ressort 46 entre la tête et la surface d'appui annulaire 40a. De ce fait, la lame tend à perdre son état cintré et à s'aplatir, et par conséquent à voir sa largeur augmenter. Cet accroissement de largeur provoque la venue en prise progressive des deux bords latéraux de la lame 46 avec une grande fermeté contre la surface intérieure 22a (figure 2) des parois latérales du fourreau 22, avec un effet de verrouillage par accrochage. La rotation de la vis est poursuivie jusqu'au serrage total de celle-ci, serrage qui contribue également à immobiliser fermement le coulisseau 34 contre la console 56 de la carrosserie.

On réalise ainsi l'immobilisation des deux éléments 22 et 34 du dispositif, et donc la fixation rigide du projecteur dans la position de réglage souhaitée.

Bien entendu, à titre de variante, il sera possible d'effectuer le montage en vissant tout d'abord le coulisseau 34 sur la carrosserie 56, en prenant garde de ne pas mettre la lame ressort 46 sous tension, puis en amenant le fourreau 22 autour du coulisseau, et enfin en poursuivant le vissage de manière à provoquer le verrouillage par déformation élastique de la lame de la même manière que ci-dessus, et en même temps l'immobilisation ferme du coulisseau contre la carrosserie.

On peut noter ici que la forme arrondie des bords d'accrochage 46a de la lame ressort 46 permet de conserver un blocage efficace même lorsque ladite lame, montée avec un certain jeu dans le coulisseau 34, n'est pas orientée parfaitement horizontalement.

Selon la nature du matériau qui constitue le fourreau 22, le phénomène d'accrochage pourra différer dans sa fonction. Par exemple, si le fourreau est en matière plastique, le blocage ferme sera obtenu majoritairement par déformation plastique du matériau. Inversement, si le matériau est un métal, c'est en grande partie une déformation élastique des parois du fourreau, avec une force de rappel correspondante relativement importante, qui assurera un blocage par simple effet de frottement. Bien entendu, on pourra choisir un matériau dans lequel les effets de la déformation plastique et de la déformation élastique soient combinés.

Mais dans tous les cas, la fixation obtenue sera démontable par simple dévissage partiel de la vis 52, la lame 46 reprenant alors spontanément sa position cintrée, sans que la coopération d'accrochage avec l'élément 22 ne puisse y faire obstacle.

On a représenté sur la figure 7 une variante de cette première forme de réalisation de l'invention, spécialement adaptée lorsque le matériau du fourreau est relativement dur. Dans cette variante, on a ménagé dans la surface intérieure 22'a des flancs du fourreau 22' une série de rainures 60 verticales parallèles. Dans le présent exemple, la section de ces rainures est triangulaire. Ainsi, lors de la mise sous tension de la lame 46, chacun des bords d'accrochage 46a de celle-ci va s'engager spontanément dans une des rainures, pour assurer avec davantage de fermeté encore l'immobilisation des deux éléments 22' et 34 et la fixation du projecteur.

De retour à la figure 1, on peut noter que le caractère souple de la fixation du projecteur dans sa région supérieure permettra de réaliser des réglages en profondeur différents au niveau des deux dispositifs de fixation 20, sans créer de contraintes substantielles dans l'une quelconque des fixations.

Par ailleurs, une fois que le réglage d'orientation du projecteur tel que décrit ci-dessus aura été effectué, alors on pourra mettre en oeuvre des moyens de de réglage optique du projecteur tout à fait classiques, qui agiront entre le boîtier 24 dudit projecteur et le réflecteur (non représenté) situé à l'intérieur du boîtier et mobile par rapport à celui-ci.

Bien entendu, on pourra prévoir des dispositifs de fixation réglable tels que décrits ci-dessus en tout nombre approprié sur un projecteur, pour assurer l'alignement de la glace de fermeture 11 avec la carrosserie.

On pourra également utiliser ce type de dispositif pour assurer le réglage optique d'un projecteur.

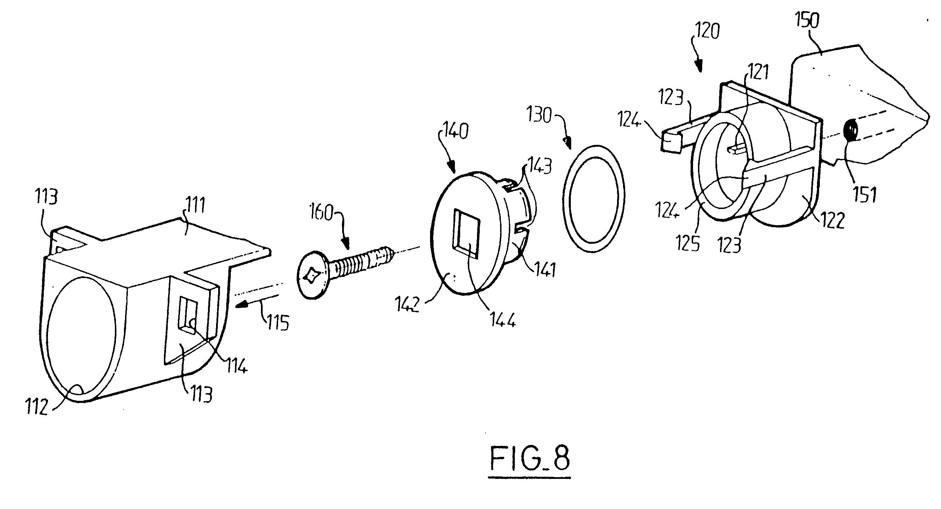

En référence aux figures 8 à 12, on va maintenant décrire un dispositif selon une seconde forme de réalisation de l'invention. On peut noter que les termes "avant" et "arrière" utilisés ci-après s'entendent de la gauche vers la droite sur la vue en perspective de la figure.

Le dispositif est également constitué de deux parties principales. Un premier élément 110 ou fourreau est solidaire du boîtier du projecteur (non représenté) par l'intermédiaire d'une patte 111. Ce fourreau 110 a un axe sensiblement horizontal et parallèle à l'axe du projecteur. Il comporte un évidement axial 112 de section circulaire.

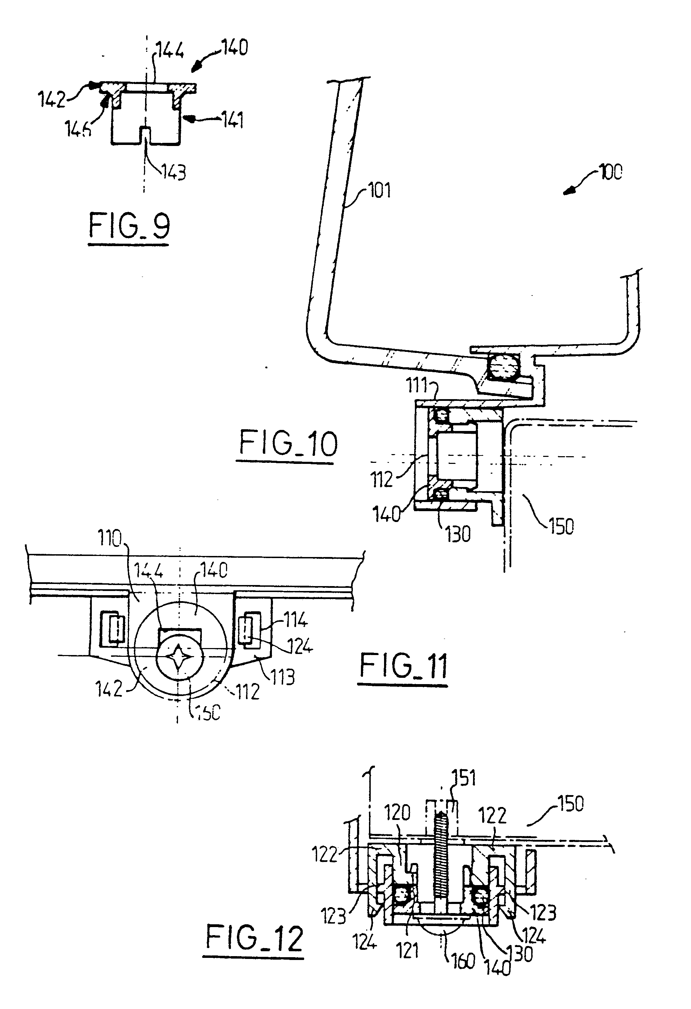

Comme le montrent plus précisément les figures 9 et 10, le fourreau comporte, en outre, perpendiculairement à son axe, deux oreilles 113 disposées symétriquement l'une par rapport à l'autre et percées chacune d'une fenêtre rectangulaire 114.

La seconde partie du dispositif est constituée par un coulisseau 120 de forme générale cylindrique dont la section extérieure présente des dimensions de préférence légèrement inférieures à celle de la section intérieure du fourreau, afin de pouvoir coulisser librement dans celui-ci en direction horizontale, avec un jeu transversal minimal. Ce coulisseau est muni intérieurement d'un ergot 121, comme le montre la figure 12, dont le rôle sera précisé, plus loin, dans la description.

De l'arrière du coulisseau s'étend une collerette 122 perpendiculaire à l'axe du coulisseau. Celle-ci comporte deux doigts 123 dirigés axialement vers l'avant et dont l'extrémité libre 124 est biseautée et présente un décrochement. Ces doigts sont placés latéralement de part et d'autre du coulisseau.

Le coulisseau 120 est destiné à recevoir un organe élastique de verrouillage sous la forme d'une rondelle de caoutchouc 130. La rondelle de caoutchouc est dimensionnée pour être positionnée contre la face avant du coulisseau. Son grand diamètre est tel qu'il coïncide avec le grand diamètre du coulisseau. Son petit diamètre a une dimension telle qu'il soit égal ou supérieur au diamètre intérieur du coulisseau.

Le dispositif comporte de plus un élément formant cale 140 destiné à maintenir la rondelle 130 contre la face avant 125 du coulisseau et à appliquer sur toute l'étendue de ladite rondelle, une force de serrage comme on le verra plus loin.

Comme le montre en détail la figure 9, cet élément formant cale 140, de forme générale cylindrique creuse, comporte à une extrémité des découpes axiales équiréparties angulairement. Son autre extrémité est fermée par une partie en forme de disque s'étendant perpendiculairement à l'axe du cylindre et percée d'une ouverture traversante 144 de forme carrée. L'élément comporte un épaulement 146 tel que le diamètre du disque coïncide avec le diamètre intérieur du fourreau, alors que le diamètre extérieur du cylindre coïncide avec le diamètre intérieur de la rondelle de caoutchouc.

Dans cet exemple de réalisation, l'élément formant cale, comporte quatre découpes axiales, mais il pourrait en comporter un nombre différent (inférieur ou supérieur). Dans la réalisation illustrée ici, les découpes sont placées de telle façon que leur axe 145 coupe chaque côté de l'ouverture carrée en son milieu.

Enfin une vis 160 est susceptible d'être vissée dans un trou taraudé complémentaire 151 prévu sur une partie formant console de la carrosserie du véhicule, en traversant, de l'avant vers l'arrière l'ouverture carrée de la cale et le trou central de la rondelle de caoutchouc.

Le montage et l'utilisation du dispositif de fixation réglable décrit précédemment sont les suivants.

Le coulisseau 120 est inséré par l'arrière 115 du fourreau 110. Pendant ce mouvement de coulissement, l'extrémité biseautée 124 de chacun des doigts 123 du coulisseau vient s'encliqueter dans les fenêtres 114 des oreilles 113 du fourreau. Les doigts sont dimensionnés de telle façon qu'en position montée, le coulisseau et le fourreau puissent coulisser l'un par rapport à l'autres sur une certaine distance. Ce jeu permet le réglage de la position du projecteur par rapport à la console 150 du véhicule.

La rondelle de caoutchouc 130 est alors placée sur la face avant 125 du coulisseau. On place ensuite l'élément formant cale 140. Une des quatre découpes axiales 143 pratiquées sur celui-ci vient en prise sur l'ergot 121 placé sur la surface intérieure du coulisseau. L'élément 140 ne peut plus se mouvoir en rotation par rapport au reste du dispositif. Les quatre découpes axiales déterminent ainsi quatre positions possibles de la cale, correspondant à une même orientation (bords horizontaux et verticaux) de l'ouverture carrée 144. La mise en place de la cale 140 est ainsi facilitée.

La vis 160 est alors mise en place en traversant successivement l'ouverture carrée de la cale, la rondelle de caoutchouc et le coulisseau, et est vissée dans le trou 151, sa tête s'appuyant sur la cale 140.

Pendant le vissage (effectué de façon classique), le dispositif est progressivement rapproché de la console 150. Dès que le coulisseau vient en appui contre la console, on effectue alors manuellement l'orientation du projecteur de manière à ce que sa glace de fermeture 101 (voir figure 10) soit parfaitement alignée avec les bords voisins de la carrosserie du véhicule. Une fois ce réglage effectué et conservé à l'aide de la main, on tourne à nouveau la vis 160 dans le sens du serrage, ce qui provoque la compression axiale de la rondelle de caoutchouc 130 entre la face avant du coulisseau 125 et le disque 142 de l'élément 140. La compression axiale de la rondelle provoque une expansion latérale de celle-ci, et la rondelle, axialement solidaire du coulisseau, vient alors se bloquer par sa surface périphérique latérale contre la face intérieure du fourreau.

On réalise ainsi l'immobilisation des deux éléments 110 et 120 du dispositif et, par conséquent la fixation rigide du projecteur dans la position de réglage souhaitée.

La rondelle de caoutchouc 130 assure le blocage du dispositif sans déformer la surface intérieure du coulisseau, ni subir une fatigue prématurée.

On peut noter ici que la section de l'ouverture 144 est avantageusement plus grande que celle de la tige de la vis 160. Ceci permet d'absorber des jeux transversaux éventuels entre le projecteur et le trou 151 de la carrosserie.

De plus, un avantage de ce type de fixation réside en ce que la rondelle absorbe les vibrations auxquelles pourraient être soumis le dispositif. Elle joue alors le rôle de "silent-bloc".

A titre de variante, il est possible de ne pas utiliser un élément 140 tel que celui décrit précédemment mais de se munir d'une vis dont la tête a un diamètre légèrement inférieur au diamètre du fourreau.

Enfin, la présente invention n'est nullement limitée à la description et aux dessins, donnés à titre d'exemple seulement, mais l'homme de l'art pourra y apporter toute variante ou modification sans sortir de son cadre. En particulier, dans la première forme de réalisation, on pourra prévoir une lame ressort de verrouillage 46 qui n'agira sur le fourreau ou équivalent que par un bord d'extrémité, le bord opposé étant alors en appui contre des moyens de butée et/ou de retenue prévus sur le coulisseau ou équivalent.

## Revendications

1. Dispositif de fixation réglable pour un projecteur de véhicule automobile ou analogue, caractérisé en ce qu'il comprend deux éléments (22, 34; 110, 120) susceptibles de se déplacer l'un par rapport à l'autre selon une relation de coulissement lors d'une opération de réglage du projecteur, l'un (22; 110) desdits éléments étant solidaire du projecteur et l'autre (34; 120) étant apte à être fixé sur la carrosserie (56; 150) du véhicule par une vis (52; 160), le dispositif comprenant en outre un organe élastique du verrouillage (46; 130) susceptible de coopérer avec le second élément et avec la vis, et comportant au moins un bord d'accrochage (46a), le serrage de ladite vis provoquant initialement l'appui du second élément (34; 120) contre la carrosserie (56) du véhicule puis, en utilisant cet appui, la déformation élastique dudit organe (46; 130) et la venue en prise du ou des bords d'accrochage (46a) avec le premier élément (22; 110) pour assurer le blocage des deux éléments (22, 34; 110, 120) dans leur position relative correspondant au réglage souhaité.

2. Dispositif selon la revendication 1, caractérisé en ce que l'organe élastique présente la forme d'une lame ressort (46) dont le profil au repos est cintré et qui s'étend transversalement à la direction du coulissement entre les deux éléments.

3. Dispositif selon la revendication 2, caractérisé en ce que les bords d'accrochage (46a) sont deux bords opposés arrondis de ladite lame (46).

4. Dispositif selon la revendication 3, caractérisé en ce que le second élément (34) comporte un manchon (40) traversé par la vis (52) et comportant à son extrémité située du côté de la tête de la vis une surface d'appui annulaire (40a), la déformation élastique dudit organe de verrouillage (46) en forme de lame ressort consistant en un aplatissement de ladite lame, provoquant un accroissement de la distance entre ses deux bords d'accrochage (46a).

5. Dispositif selon l'une quelconque des revendications 1 à 4, caractérisé en ce que la venue en prise du ou des bords d'accrochage (46a) avec le premier élément (22) s'effectue, selon la nature du matériau constituant ce dernier, avec déformation plastique et/ou déformation élastique dudit premier élément (22).

6. Dispositif selon l'une quelconque des revendications 1 à 4, caractérisé en ce que la venue en prise du ou des bords d'accrochage (46a) avec le premier élément (22') s'effectue avec engagement de chacun desdits bords d'accrochage dans l'une parmi une série de rainures parallèles (60).

7. Dispositif selon l'une quelconque des revendications 1 à 6, caractérisé en ce que le premier élément présente la forme d'un fourreau (22) et le second élément la forme d'un coulisseau (34) reçu dans le fourreau, le ou les bords d'accrochage de l'organe de verrouillage (46) venant en prise avec des surfaces intérieures (22a), situées en regard, dudit fourreau.

8. Dispositif selon la revendication 7, caractérisé en ce qu'il comprend des moyens de butée (36, 28, 44) délimitant le mouvement de coulissement mutuel des deux éléments (22, 34).

9. Dispositif selon la revendication 8, caractérisé en ce que les moyens de butée comprennent, sur le second élément (34), un doigt souple (36) qui, en s'encliquetant dans une encoche (28) prévue dans le premier élément (22), assure également l'assemblage préliminaire des deux éléments.

10. Dispositif selon la revendication 1, caractérisé en ce que que ledit organe élastique est une rondelle de caoutchouc (130), ladite déformation élastique étant une compression axiale avec expansion latérale.

11. Dispositif de fixation selon la revendication 10, caractérisé en ce que le bord d'accrochage est constitué par la surface périphérique extérieure de ladite rondelle de caoutchouc (130).

12. Dispositif de fixation selon l'une des revendications 10 ou 11, caractérisée en ce que ledit second élément (120) comporte, à son extrémité libre située du côté de la tête de la vis, une surface d'appui annulaire (125) pour ladite rondelle.

13. Dispositif de fixation selon la revendication 12, caractérisé en ce que l'effort de compression et d'expansion est réalisé par l'intermédiaire d'un élément formant cale (140) sur lequel s'appuie la tête de vis et qui comporte un épaulement (142) pour agir sur la rondelle (130).

14. Dispositif de fixation selon la revendication 13, caractérisé en ce que ledit élément formant cale (140) comporte à une extrémité, au moins une découpe axiale (143) et en ce que le second élément comporte sur sa surface intérieure un ergot (121) destiné à coopérer avec la découpe axiale ou l'une des découpes axiales (143) de façon à bloquer ledit élément formant cale (140) en rotation.

15. Dispositif de fixation selon la revendication 14, caractérisé en ce que ledit élément formant cale comporte quatre découpes axiales (143) équiréparties angulairement.

16. Dispositif selon l'une des revendications 10 à 15, caractérisé en ce que le premier élément présente la forme d'un fourreau (110) et le second élément la forme d'un coulisseau (120) reçu dans le fourreau, le bord d'accrochage de l'organe de verrouillage venant en prise avec la surface intérieure dudit fourreau, située en regard.

17. Dispositif selon l'une des revendications 10 à 16, caractérisé en ce que le second élément comprend des doigts souples (123) qui, en s'encliquetant dans des fenêtres (114) prévues sur le premier élément, assurent l'assemblage préliminaire des deux éléments (110) et (120) tout en définissant des moyens de butée délimitant le mouvement de coulissement mutuel des deux éléments.

**Patentansprüche**

1. Einstellungseinrichtung für einen Kraftfahrzeugscheinwerfer oder eine ähnliche Leuchte, *dadurch gekennzeichnet*, daß sie zwei Elemente (22, 34; 110, 120) enthält, die im Verhältnis zueinander in einem gleitenden Verhältnis bei einem Einstellvorgang des Scheinwerfers verschoben werden können, wobei eines (22; 110) der genannten Elemente fest mit dem Scheinwerfer verbunden und das andere (34; 120) zur Befestigung an der Karosserie (56; 150) des Fahrzeugs mittels einer Schraube (52; 160) geeignet ist, während die Vorrichtung außerdem ein elastisches Verriegelungsorgan (46; 130) enthält, welches mit dem zweiten Element und mit der Schraube zusammenwirken kann, und versehen mit wenigstens einer Eingriffskante (46a), wobei das Anziehen der genannten Schraube zunächst das Aufliegen des zweiten Elements (34, 120) an der Karosserie (56) des Fahrzeugs bewirkt und danach, unter Nutzung dieser Auflage, die elastische Verformung des genannten Organs (46; 130) und den Eingriff der Eingriffskante(n) (46a) mit dem ersten Element (22; 110), um so die Blockierung der beiden Elemente (22, 34; 110, 120) in der der gewünschten Einstellung entsprechenden relativen Position zu gewährleisten.

2. Vorrichtung nach Anspruch 1, *dadurch gekennzeichnet*, daß das elastische Organ die Form eines Federblatts (46) hat, dessen Profil in Ruhestellung gebogen ist und welches sich quer zur Gleitrichtung zwischen den beiden Elementen erstreckt.

3. Vorrichtung nach Anspruch 2, *dadurch gekennzeichnet*, daß die Eingriffskanten (46a) zwei einander gegenüberliegende, abgerundete Kanten des genannten Federblatts (46) sind.

4. Vorrichtung nach Anspruch 3, *dadurch gekennzeichnet*, daß das zweite Element (34) eine Muffe (40) aufweist, wodurch die Schraube (52) hindurchtritt und an deren schraubenkopfseitigem Ende eine ringförmige Auflagefläche (40a) vorhanden ist, während die elastische Verformung des genannten Verriegelungsorgans (46) in Federblattform in einer Abflachung des genannten Federblatts besteht, wodurch eine Vergrößerung des Abstandes zwischen den beiden Eingriffskanten (46a) bewirkt wird.

5. Vorrichtung nach einem der Ansprüche 1 bis 4, *dadurch gekennzeichnet*, daß der Eingriff der Eingriffskante(n) (46a) mit dem ersten Element (22) je nach Materialbeschaffenheit desselben unter plastischer Verformung und/oder elastischer Verformung des genannten ersten Elements (22) vonstatten geht.

6. Vorrichtung nach einem der Ansprüche 1 bis 4, *dadurch gekennzeichnet*, daß der Eingriff der Eingriffskante(n) (46a) mit dem ersten Element (22') vonstatten geht, indem jede der genannten Eingriffskanten in eine von einer Reihe paralleler Nuten (60) eingreift.

7. Vorrichtung nach einem der Ansprüche 1 bis 6, *dadurch gekennzeichnet*, daß das erste Element die Form eines Futters (22) und das zweite Element die Form eines Stößels (34) hat, der im Futter sitzt, wobei die Eingriffskante(n) des Verriegelungsorgans (46) mit den Innenflächen (22a) in Eingriff kommen, welche gegenüber dem genannten Futter angeordnet sind.

8. Vorrichtung nach Anspruch 7, *dadurch gekennzeichnet*, daß sie Anschlagsmittel (36, 28, 44) enthält, die die gegenseitige Gleitbewegung der beiden Elemente (22, 34) begrenzen.

9. Vorrichtung nach Anspruch 8, *dadurch gekennzeichnet*, daß die Anschlagsmittel am zweiten Element (34) einen elastischen Finger (36) enthalten, der in einen im ersten Element (22) vorgesehenen Einschnitt (28) einrastet und dadurch auch die Vormontage der beiden Elemente bewerkstelligt.

10. Vorrichtung nach Anspruch 1, *dadurch gekennzeichnet*, daß das genannte elastische Organ eine Gummischeibe (130) ist, wobei die genannte elastische Verformung eine axiale Zusammendrückung mit seitlicher Ausdehnung ist.

11. Befestigungsvorrichtung nach Anspruch 10, *dadurch gekennzeichnet*, daß die Eingriffskante aus der äußeren Umfangsfläche der genannten Gummischeibe (130) besteht.

12. Befestigungsvorrichtung nach einem der Ansprüche 10 oder 11, *dadurch gekennzeichnet*, daß das genannte zweite Element (120) an seinem auf der Schraubenkopfseite gelegenen freien Ende eine ringförmige Auflagefläche (125) für die genannte Scheibe aufweist.

13. Befestigungsvorrichtung nach Anspruch 12, *dadurch gekennzeichnet*, daß die Zusammendrückungs- und Ausdehnungsbeanspruchung mit Hilfe eines Unterlegelements (140) bewirkt wird, worauf der Schraubenkopf aufliegt und welches einen Bund (142) bildet, um auf die Scheibe (130) einzuwirken.

14. Befestigungsvorrichtung nach Anspruch 13, *dadurch gekennzeichnet*, daß das genannte Unterlegelement (1 40) an einem Ende wenigstens einen axialen Ausschnitt (143) aufweist und daß das zweite Element an seiner Innenfläche einen Nocken (121) besitzt, der geeignet ist, mit dem axialen Ausschnitt oder einem der axialen Ausschnitte (143) in der Weise zusammenzuwirken, daß das genannte Unterlegelement (140) in der Drehbewegung blockiert wird.

15. Befestigungsvorrichtung nach Anspruch 14, *dadurch gekennzeichnet*, daß das genannte Unterlegelement vier axiale Ausschnitte (143) aufweist, die in gleichen Winkelabständen angeordnet sind.

16. Vorrichtung nach einem der Ansprüche 10 bis 15, *dadurch gekennzeichnet*, daß das erste Element die Form eines Futters (110) und das zweite Element die Form eines Stößels (120) aufweist, der in dem Futter sitzt, wobei die Eingriffskante des Verriegelungselements mit der gegenüberliegenden Innenfläche des genannten Futters in Eingriff gelangt.

17. Vorrichtung nach einem der Ansprüche 10 bis 16, *dadurch gekennzeichnet*, daß das zweite Element elastische Finger (123) aufweist, die in am ersten Element vorgesehene Fenster (114) eingreifen und dadurch die Vormontage der beiden Elemente (110) und (120) gewährleisten und dabei gleichzeitig Anschlagselemente definieren, die die wechselseitige Gleitbewegung der beiden Elemente begrenzen.

**Claims**

1. An adjustable fixing device for a headlight of an automobile or the like, characterized in that it comprises: two elements (22, 34; 110, 120) able to be displaced one with respect to the other according to a sliding relation during an adjustment operation of the headlight, one (22; 110) of said elements being fixed to said headlight and the other (34; 120) being adapted to be fixed on a body of said automobile by means of a screw (52; 160), the device further comprising a resilient locking member (46, 130) able to cooperate with said second element and with said screw, and comprising at least one gripping edge (46a), the tightening of said screw causing initially abutment of said second element (34; 120) against said body (56) of said automobile and then, using this abutment, the resilient deformation of said member (46; 130) and the engagement of the gripping edge or edges (46a) with said first element (22; 110) for ensuring the clamping of said two elements (22, 34; 110, 120) in their relative position corresponding to the desired adjustment.

2. A device according to claim 1, characterized in that said resilient member has the form of a leaf spring (46) of which the profile at rest is curved and which extends transversely to the direction of sliding between said two elements.

3. A device according to claim 2, characterized in that said gripping edges (46a) are two rounded opposed edges of said leaf (46).

4. A device according to claim 3, characterized in that said second element (34) comprises a sleeve (40) through which said screw (52) extends and having at its end located on the screw head side an annular abutment surface (40a), the resilient deformation of said locking member (46) in the form of a leaf spring consisting in a flattening of said leaf, causing an increase of the distance between its two said gripping edges (46a).

5. A device according to any one of claims 1 – 4, characterized in that the engagement of said gripping edge or edges (46a) with said first element (22) is effected, depending on the nature of constituent material of this latter, with plastic deformation and/or elastic deformation of said first element (22).

6. A device according to any one of claims 1 – 4, characterized in that the engagement of said gripping edge or edges (46a) with said first element (22') is effected through the insertion of each of said gripping edges in one of a series of parallel grooves (60).

7. A device according to anyone of claims 1 – 6, characterized in that said first element has the form of a sheath (22) and the second element the form of a slide (34) received in said sheath, said gripping edge or edges of said locking member (46) engaging with opposite internal surfaces (22a) of said sheath.

8. A device according to claim 7, characterized in that it further comprises abutment means (36, 28, 44) limiting mutual sliding movement of said two elements (22, 34).

9. A device according to claim 8, characterized in that said abutment means comprise, on said second element (34), a flexible finger (36) which, by snap fitting into a notch (28) provided in said first element (22), also ensures the preliminary assembly of said two elements.

10. A device according to claim 1 characterized in that said resilient member is an elastomeric washer (130), said resilient deformation being an axial compression with lateral expansion.

11. A fixing device according to claim 10, characterized in that said gripping edge is constituted by the external peripheral surface of said elastomeric washer (130).

12. A fixing device according to any one of claims 10 – 11, characterized in that second element (120) comprises, at its free end situated on the screw head side, an annular abutment surface (125) for said washer.

13. A fixing device according to claim 12, characterized in that the force of compression and expansion is produced through a wedge element (140) on which abuts said head of said screw and which has a shoulder (142) for acting on said washer (130).

14. A fixing device according to claim 13, characterized in that said wedge element (140) comprises, at one end, at least one axial notch (143) and said second element has on its internal surface a lug (121) adapted to cooperate with said axial slot or one of said axial slots (143) in a manner to clamp said wedge element against rotation.

15. A fixing device according to claim 14, characterized in that said wedge element has four axial slots (143) equiangularly spaced.

16. A device according to any one of claims 10 – 15, characterized in that said first element has the form of a sheath (110) and said second element has the form of a slide (120) received in said sheath, said gripping edge of said locking member engaging the internal surface of said sheath, located opposite thereto.

17. A device according to any one of claims 10 – 16, characterized in that said second element comprises flexible fingers (123) which, by snap fitting into windows (114) provided in said first element, ensure the preliminary assembly of said two elements (110, 120) whilst defining abutment means delimiting the mutual sliding movement of said two elements.

FIG_1

FIG_2

FIG_3

FIG.4

FIG.5

FIG.6

FIG.7

FIG.8

FIG_9

FIG_10

FIG_11

FIG_12